# EUROPÄISCHE PATENTSCHRIFT

(11) **EP 1 546 523 B1**
(45) Veröffentlichungstag und Bekanntmachung des Hinweises auf die Patenterteilung: **19.05.2010**
(21) Anmeldenummer: 03775093.2
(22) Anmeldetag: 29.10.2003
(51) Int. Cl.: F02B 29/08, F02D 9/16

(54) **KOLBENMASCHINE, INSBESONDERE HUBKOLBENVERBRENNUNGSMOTOR MIT ZUSÄTZLICHER LADUNGSSTEUERUNG**
PISTON ENGINE, ESPECIALLY RECIPROCATING INTERNAL COMBUSTION ENGINE WITH ADDITIONAL CHARGE CONTROL MECHANISM
MACHINE A PISTON, NOTAMMENT MOTEUR A PISTON ALTERNATIF A COMBUSTION INTERNE DOTE D'UNE COMMANDE SUPPLEMENTAIRE DE CHARGE

(30) Priorität: 09.11.2002 DE 10252208
(43) Veröffentlichungstag der Anmeldung: 29.06.2005
(73) Patentinhaber: MAHLE Ventiltrieb GmbH, 70376 Stuttgart (DE)
(72) Erfinder: LECHNER, Martin, 70378 Stuttgart (DE)
(74) Vertreter: BRP Renaud & Partner
(86) Internationale Anmeldenummer: PCT/DE2003/003605
(87) Internationale Veröffentlichungsnummer: WO 2004/044404

(56) Entgegenhaltungen:
- EP-A- 0 459 964
- DE-A- 2 621 362
- DE-A- 2 938 118
- US-A- 5 105 784
- US-A1- 2002 005 185

## Beschreibung

Die Erfindung betrifft eine Kolbenmaschine, insbesondere einen Hubkolbenverbrennungsmotor mit zusätzlicher Ladungssteuerung nach dem Oberbegriff des Patentanspruchs 1.

Eine solche Einrichtung ist aus US 2002/0005185 A1 bekannt. Die Zusatzventile sind dort als jeweils oszillierend angetriebene Klappen- bzw. Flügelventile ausgebildet. Bei hohen Frequenzen bereiten oszillierende Antriebe grundsätzlich wegen der jeweils erforderlichen Verzögerungen und Beschleunigungen Probleme. Insbesondere bei schnelldrehenden Verbrennungsmotoren sind diese Probleme zumindest ohne einen hohen einrichtungsmäßigen Aufwand nicht oder zumindest nicht mit ausreichender Betriebssicherheit erreichbar.

Aus der EP 0 459 964 A1 ist eine Hubkolbenverbrennungsmaschine mit einer verzögerten Ladungssteuerung bekannt. Dabei ist ein zu den Hauptventilen führender Ladungskanal in zwei parallel zueinander verlaufende Ladungskanalwege geteilt. Der Zustrom über jeden der Ladungskanalwege wird durch ein separates magnetgesteuertes Klappenventil gesteuert.

Aus der US 5,105,784 A ist eine Hubkolbenverbrennungsmaschine mit einem in einem Ladungskanal angeordneten Drehschieberventil bekannt.

Hiervon ausgehend beschäftigt sich die Erfindung mit dem Problem, für den gattungsgemäßen Anwendungszweck besser geeignete Zusatzventile zur Verfügung zu stellen.

Gelöst wird dieses Problem bei einer gattungsgemäßen Hubkolbenmaschine durch eine Ausbildung der Zusatzventile nach den kennzeichnenden Merkmalen des Patentanspruchs 1.

Zweckmäßige und vorteilhafte Ausgestaltungen sind Gegenstand der Unteransprüche.

Ein in dem Ansaugtrakt eines Verbrennungsmotors zur zusätzlichen Ladungssteuerung eingesetztes Zusatzventil in der Form eines rotierend arbeitenden Drehschiebers ist bereits aus DE 26 21 362 A1 bekannt. Durch eine bei jener Ausführung fehlende Aufteilung eines Ladungskanalbereiches in zwei parallele Ladungskanalwege mit dort jeweils zumindest einem, vorgesehenen, rotierend arbeitenden Drehschieber sind die Möglichkeiten für eine zusätzliche Ladungssteuerung beschränkt. So ist es beispielsweise bei einem Ladungskanal mit nicht bereichsweise parallel geführten, mit jeweils einem Zusatzsteuerventil versehenen Parallelströmungswegen nicht möglich, Schließ- und Öffnungszeiten voneinander unabhängig verändern zu können, da deren Zuordnung von der unveränderbaren Geometrie des rotierenden Schiebers sowie der unveränderbaren Geometrie der gehäuseseitigen Steuerkanten des Drehschieberventiles abhängig ist.

Die Erfindung beruht auf dem allgemeinen Gedanken, durch eine bereichsweise Aufteilung des Ladungskanales in zwei parallel zueinander verlaufende Strömungswege, in denen jeweils ein rotierend arbeitendes Drehschieberventil vorgesehen ist, nahezu beliebige Steuermöglichkeiten für den Ladungsvolumenstrom durch Phasenverschiebung der Rotationsbewegung der Drehschieber in den Drehschieberventilen zu erreichen.

Eine solche erfindungsgemäße Ladungssteuervariabilität lässt sich insbesondere nicht mit einer Einrichtung nach JP 22 41 925 erreichen, bei der in einem ungeteilten Ladungskanal ein Zusatzventil in der Form eines Drehschieberventiles mit zwei konzentrisch ineinanderlaufenden Drehschiebern eingesetzt ist.

Ausführungsbeispiele der Erfindung unter Angabe verschieden möglicher Ladungszusatzsteuerungen sind in der Zeichnung dargestellt und werden nachfolgend näher beschrieben.

In der Zeichnung zeigen
- Fig. 1: eine schematische, teilweise geschnittene Ansicht eines Ladungskanales mit einem Parallelströmungsbereich mit einem Drehschieber-Zusatzventil in jedem der beiden Strömungsteilbereiche,
- Fig. 2 A bis D: Ladungssteuerdiagramme mit Bezug auf einen zu befüllenden Arbeitsraum,
- Fig. 3: einen Ladungskanal in einer Grundausführung nach Fig. 1, bei der im Unterschied zu der Ausführung in Fig. 1 in einem der beiden Parallelströmungswege zwei Drehschieberventile in Reihe angeordnet sind,
- Fig. 4 A bis C: mit einer Einrichtung nach Fig. 3 im Unterschied zu derjenigen nach Fig. 1 erreichbare Ladungssteuerdiagramme.

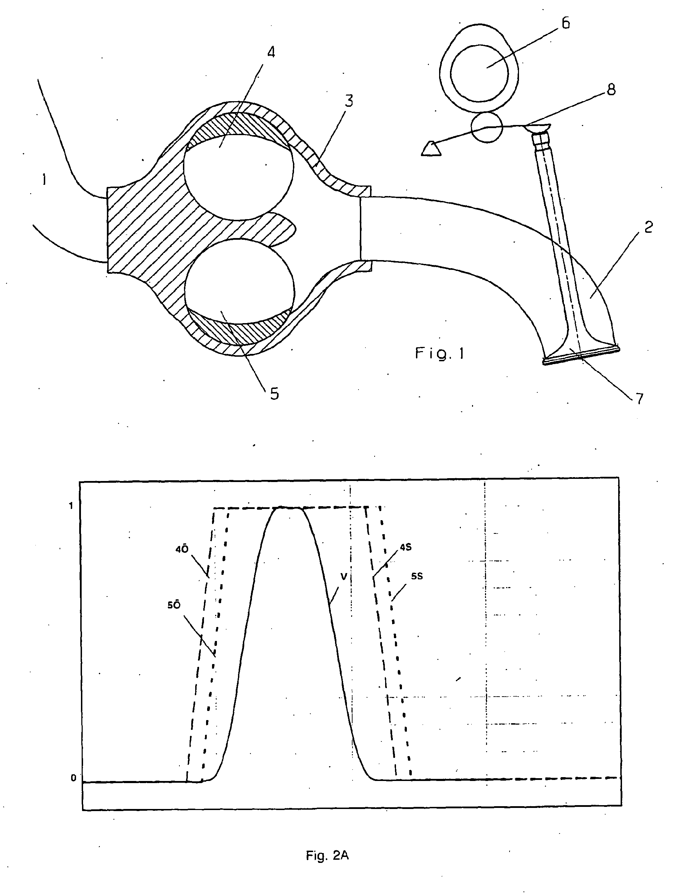

Fig. 1 zeigt ein Beispiel für einen Ladungskanal eines Hubkolbenverbrennungsmotors mit einem Saugrohr 1, einem in den Arbeitsraum des Verbrennungsmotors führenden Ladungskanal 2 und einem Bereich 3 des Ladungskanales 2 mit zwei parallel zueinander verlaufenden Strömungswegen, in denen jeweils ein Drehschieberventil 4, 5 als Zusatzsteuerventil vorgesehen ist. Die Verbindung des Saugrohres 1 mit den parallelen Strömungswegen innerhalb des Bereiches 3 des Ladungskanals 2 ist zeichnerisch nicht dargestellt. Auch der Antrieb der Drehschieber innerhalb der Drehschieberventile 4 und 5 ist nicht dargestellt. Grundsätzlich können die Drehschieber der Drehschieberventile 4 und 5 mit der Umdrehungszahl der auf ein den Arbeitsraum des Verbrennungsmotors steuerndes Hauptventil 7 einwirkenden Nockenwelle 6 durch die nicht gezeichnete Kurbelwelle des Verbrennungsmotors angetrieben werden. Das mit 7 bezeichnete Hauptventil ist, ein Einlaßventil für den zugeordneten Arbeitsraum des Verbrennungsmotors, in dem bei einem Hubkolbenmotor ein Kolben oszilliert. Die Drehschieber der Drehschieberventile 4, 5 können gegeneinander und gegenüber der Phasenlage der Nockenwelle 6 phasenverschoben rotieren, wozu übliche, an sich bekannte Phasenverschiebungseinrichtungen in den Antrieb einzuschalten sind.

Die Nockenwelle 6 wirkt über beispielsweise einen Hebel 8 auf das Hauptventil 7 ein.

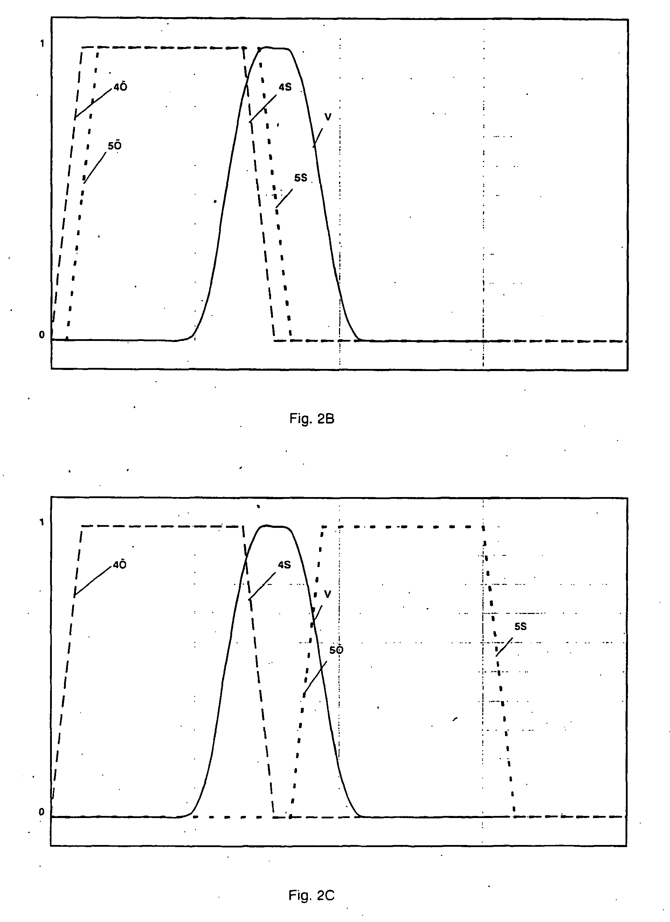

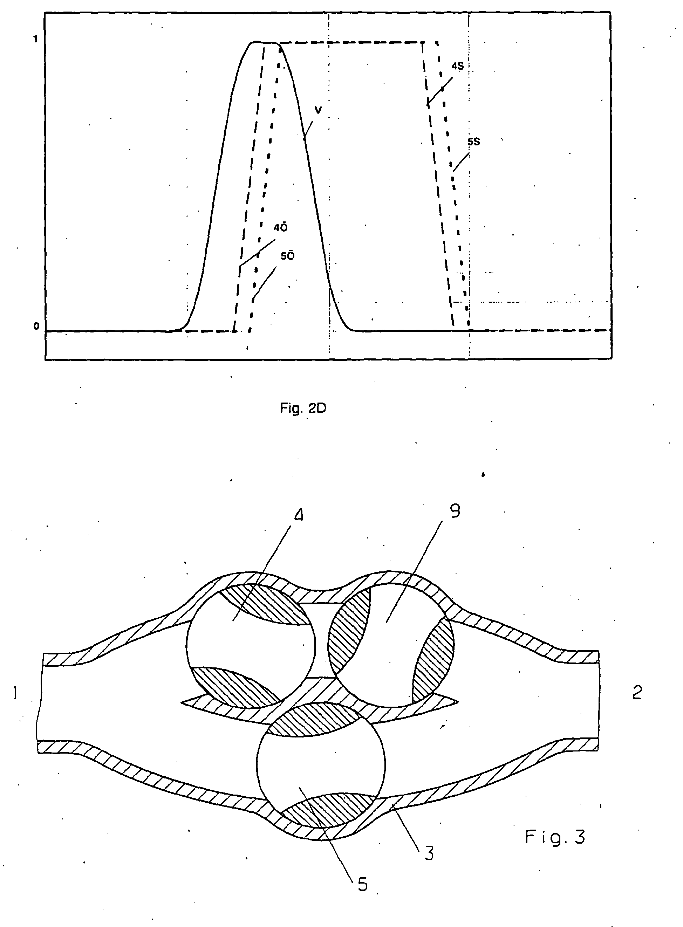

Die einzelnen Diagramme in Fig. 2 zeigen jeweils schematisch einen Einlaßventilhub (V) in Abhängigkeit des Kurbelwellendrehwinkels eines Verbrennungsmotors sowie jeweils die Öffnungs- und Schließzeiten für die beiden Drehschieber (4Ö, 5Ö, 4S, 5S) für einen zugeordneten Motorzylinder als Arbeitsraum. Die Darstellung erfolgt jeweils derart, dass die auf der Ordinate eingetragenen Ziffern 1 voll geöffneter und 0 geschlossener Querschnitt bedeuten.

Der in dem Diagramm in Fig. 2A dargestellte Betriebspunkt entspricht einem funktionslosen Zustand der als Drehschieber 4, 5 ausgebildeten Zusatzsteuerventile. Ein solcher Betriebspunkt kann je nach Auslegung der Sauganlage beispielsweise im Maximalleistungspunkt erwünscht sein. Funktionsloser Zustand der Drehschieber 4, 5 als Zusatzsteuerventile bedeutet, dass eine Rotation der Drehschieber erfolgt, durch die ein Strömungszustand innerhalb des Ladungskanals 2 vorliegt wie er auch bei vollständig fehlenden Zusatzsteuerventilen gegeben wäre. Ein solches mögliches Verhalten der erfindungsgemäßen Zusatzsteuerventile ist ein besonderer Vorteil der Erfindung.

Die Fig. 2B zeigt einen Zustand, bei dem durch Phasenverstellung der Drehschieber 4, 5 gegenüber der Nockenwelle 6 nach früh eine Betriebsart Frühes-Einlass-Schließen (FES) eingestellt ist, in der die Ladungsmenge drosselfrei nur über die Schließzeitpunkte der Drehschieberventile 4, 5 eingestellt wird. Für den unteren und mittleren Drehzahlbereich kann mit FES auch eine Erhöhung des Volllastdrehmoments erreicht werden. Eine weitere Drehmomentsteigerung kann durch kurzzeitiges Unterbrechen des Saugvorgangs möglich werden, wie es in Fig. 2C dargestellt ist. Die Behinderung der Strömung erzeugt brennraurnseitig Unterdruck und saugrohrseitig Staudruck, was beim Wiederöffnen gemeinsam eine höhere Zylinder-, das heißt Arbeitsraumladung bewirkt, als eine Ansaugung mit keinem optimierten Schließpunkt für das Einlaßventil, vergleichbar mit der Wirkung eines Lufttaktventiles (LTV). Fig. 2D zeigt schematisch die Offen- und Geschlossenzeiten für den Betrieb Spätes-Einlass-Öffnen (SEÖ).

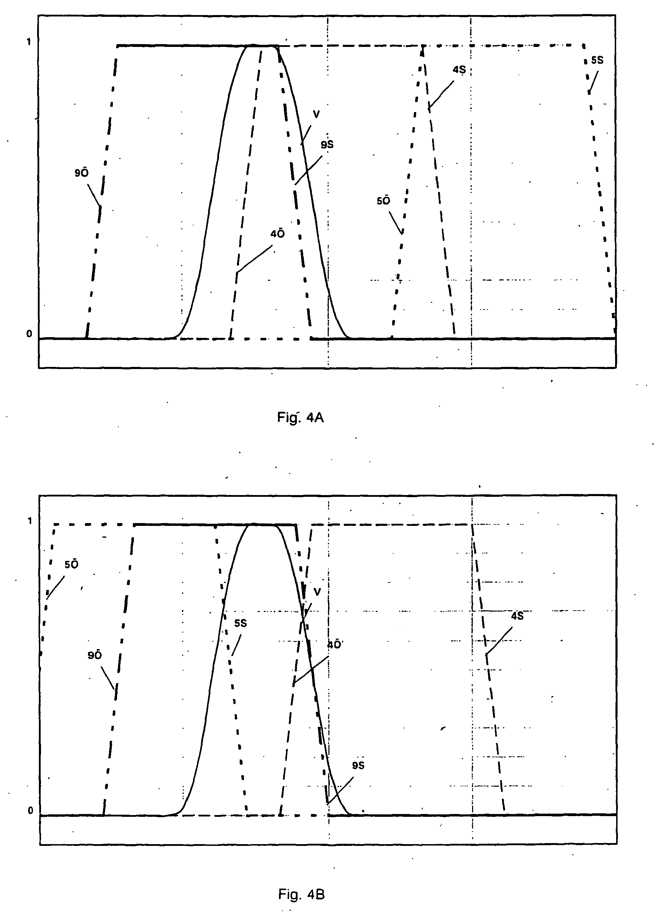

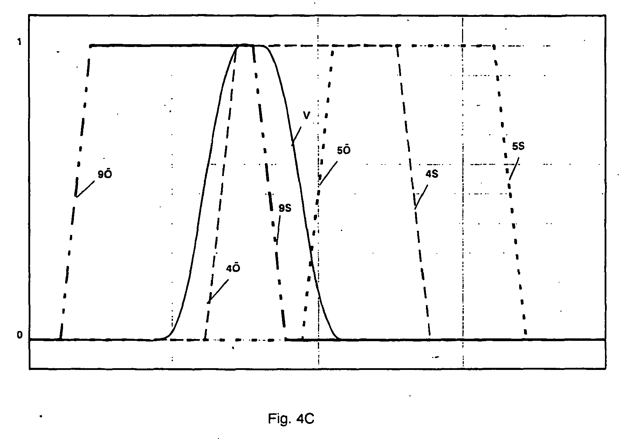

Durch die Verwendung zweier in Reihe geschalteter Drehschieberventile 4, 9 in einem der beiden parallelen Strömungswege innerhalb des Ladungskanals 2, wie sie in Fig. 3 schematisch dargestellt ist, können Betriebsarten gemäß den Ladungssteuerdiagrammen in Fig. 4 dargestellt realisiert werden.

Die in Fig. 3 eingetragenen Drehschieber der Drehschieberventile rotieren mit halber Nockenwellendrehzahl und sind unabhängig voneinander gegenüber der Nockenwelle 6 phasenverstellbar. Durch ein Geschlossenhalten des Drehschieberventils 5 und eine geeignete Phasenverstellung der Schieber der Drehschieberventile 4 und 9 kann eine Kombination aus SEÖ und FES erreicht werden. Dies ist in Fig. 4A dargestellt. Fig. 4B zeigt ein Ladungssteuerdiagramm für einen getakteten Ansaugvorgang mit zusätzlichem Schließen nach dem ersten Einströmvorgang. Fig. 4C zeigt eine Kombination von SEÖ und einem getakteten Ansaugvorgang.

Durch geeignete Phasenverstellung können beliebige Einlassöffnungszeiten und Betriebsarten realisiert werden. Verbesserungen sind dabei bei den verschiedenen Betriebsarten von Kolbenmaschinen, wie beispielsweise Verbrennungsmotoren im Zwei- und Viertaktbetrieb, Otto, Diesel, Gas, Miller, Atkinson, HCCI, freisaugender oder aufgeladener Betrieb möglich.

## Patentansprüche

1. Kolbenmaschine, insbesondere Hubkolbenverbrennungsmotor mit
- einem durch Hauptventile (7) gesteuerten Arbeitsraum,
- einem zu mindestens einem der Hauptventile (7) führenden Ladungskanal (1),
- einem in mindestens zwei parallel zueinander verlaufende Ladungskanalwege aufgeteilten Bereich des Ladungskanals (1),
- und in jedem der beiden parallel zueinander verlaufenden Ladungskanalwege mindestens einem, den dortigen Teil des Ladungsvolumenstromes steuerbaren Zusatzventil (4, 5),
**gekennzeichnet durch** die Merkmale,
- die Zusatzventile sind als bei Maschinenbetrieb einsinnig rotierende Drehschieberventile (4, 5, 9) ausgebildet,
- die Volumendurchflußströme der Haupt- und Zusatzventile (7; 4, 5, 9) einerseits sowie der Zusatzventile (4, 5, 9) untereinander andererseits sind **durch** Phasenverschiebung der Rotationsbewegung der Drehschieberventile (4, 5, 9) variabel aufeinander abstimmbar,
- zumindest in einer der parallel verlaufenden Wege des Ladekanals (2) sind mindestens zwei Drehschieberventile (4, 9) in Reihe geschaltet vorgesehen.

2. Einrichtung nach Anspruch 1,
**dadurch gekennzeichnet,**
**dass** die Drehschieberventile (4, 5, 9) synchron zur Kolbenbewegung rotieren.

3. Einrichtung nach einem der vorhergehenden Ansprüche,
**dadurch gekennzeichnet,**
**dass** die Kurbelwelle der Hubkolbenmaschine den Drehschieberventilen (4, 5, 9) als Antriebsquelle dient.

## Claims

1. A piston engine, in particular a reciprocating internal combustion engine, comprising
- a working space controlled by main valves,
- a charge channel leading to at least one of the main valves,
- a region of the charge channel divided into at least two parallel charge channel paths,
- and at least one additional valve controlling that portion of the charge volume flow in each of the two parallel charge channel paths,
**characterized by** the features whereby
- the additional valves are designed as rotary slide valves (4, 5, 9) rotating in one direction during operation of the machine,
- the volume flow of the main valves and additional valves (7; 4, 5, 9) on the other hand and the additional valves (4, 5, 9) with respect to one another on the other hand are adjustable through phase displacement of the rotational movement of the rotary slide (4, 5, 7) so they are mutually variable in relation to one another,
- at least two rotary slide valves (4, 9) are provided and are connected in series in one of the parallel paths of the charge channel (2).

2. The device according to Claim 1,
the rotary slide valves (4, 5, 9) rotate in synchronization with the movement of the piston.

3. The device according to one of the preceding claims, **characterized in that** the crankshaft of the reciprocating engine serves as a driving source for the rotary slide valves (4, 5, 9).

## Revendications

1. Moteur à mouvement alternatif, notamment moteur à combustion interne à piston alternatif,
- comportant une chambre de travail commandée par des soupapes principales (7),
- un canal de charge (1) menant à au moins une des soupapes principales (7),
- une portion du canal de charge (1) divisée en au moins deux parcours de canal de charge s'étendant parallèlement l'un à l'autre,
- et dans chacun des deux parcours de canal de charge s'étendant parallèlement l'un à l'autre au moins une soupape supplémentaire (4, 5) commandant la partie locale du courant volumique de charge,
**caractérisée par** les caractéristiques
- les soupapes supplémentaires sont réalisées comme des soupapes rotatives (4, 5, 9) entrant en rotation unidirectionnellement lors du fonctionnement du moteur,
- les courants de débit volumique des soupapes principales et supplémentaire (7; 4, 5, 9)d'une part ainsi que les soupapes supplémentaires (4, 5, 9) les unes sous les autres d'autre part peuvent être harmonisées de manière variable les unes aux autres par décalage de phase du mouvement de rotation des soupapes rotatives (4, 5, 9),
- au moins dans un des parcours s'étendant parallèlement du canal de charge (2), au moins deux soupapes rotatives (4, 9) branchées en série sont prévues.

2. Dispositif selon la revendication 1,
**caractérisé en ce que**
les soupapes rotatives (4, 5, 9) entrent en rotation de manière synchrone au mouvement du piston.

3. Dispositif selon une des revendications précédentes,
**caractérisé en ce que**
le vilebrequin du moteur à piston alternatif des soupapes rotatives (4, 5, 9) sert de source d'entraînement.
